# EUROPÄISCHE PATENTSCHRIFT

(11) **EP 2 108 605 B1**
(45) Veröffentlichungstag und Bekanntmachung des Hinweises auf die Patenterteilung: **07.07.2010**
(21) Anmeldenummer: 08006973.5
(22) Anmeldetag: 08.04.2008
(51) Int. Cl.: B65G 63/02, B61D 47/00

(54) **Einrichtung zum Transport einer Befülleinrichtung**
Device for transporting a container
Dispositif de transport d'un container

(43) Veröffentlichungstag der Anmeldung: 14.10.2009
(73) Patentinhaber: Bermüller, Wolfgang, 81927 München (DE)
(72) Erfinder: Bermüller, Wolfgang, 81927 München (DE)
(74) Vertreter: Säger, Manfred

(56) Entgegenhaltungen:
- EP-A- 0 831 002
- EP-A- 1 840 056
- WO-A-2007/051631

## Beschreibung

Die Erfindung betrifft eine gattungsgemässe Einrichtung nach dem Oberbegriff des Anspruchs 1.

Es ist eine Einrichtung bekannt (DE-19501543-C1), bei der als Befülleinrichtung ein Container verwendet wird, der umgebaut sein muss und zwei zueinander parallel sowie voneinander beabstandete nach unten offene Kanäle auf seiner Unterseite aufweist. In diesen Kanal kann ein Umsetzgerät mit eigenem Antrieb hineinfahren und dann mittels einer ebenfalls vorhandenen Hubeinrichtung den Container anheben. Im angehobenen Zustand kann dann der Container quer zu dessen Transportrichtung auf der Transporteinrichtung von dem Umsetzgerät bewegt werden.

Container haben bekanntlich an ihrem Boden vier CCs um nur dort zwecks seines Bewegens an dem Container anzugreifen und in der Transsportlage zu sichern.

Von Nachteil bei dieser bekannten Einrichtung ist die Vielzahl der Hydraulik-Verbindungsleitungen zu dem als Betriebshof- und/oder Strassenfahrzeug ausgebildeten und als Transporteinrichtung dienenden Lastkraftwagen, die das Bewegen der Container mit dem Umsetzgerät umständlich macht und dieses an den Lastkraftwagen bindet, was den Betriebsaufwand erhöht und die nutzbare Höhe des Containers erheblich einschränkt. Andererseits wird das Umsetzgerät, das nicht nur die translatorische Bewegung in der Ebene erzeugt, sondern auch die vertikale Hubbewegung beim Aufsatteln des Containers, stark belastet und ist daher störanfällig.

Es ist ferner eine gattungsgemässe Einrichtung nach der Präambel des Anspruchs 1 bekannt (EP-A-0 831 002), bei der die Befülleinrichtung nur zum einen Teil, vorzugsweise zur Hälfte auf der Ladebereichsebene steht, zum anderen Teil auf die in diese eingelassenen Hubbrücken, womit die Unterseite der CCs nicht vollständig auf der Ladebereichsebene aufgesetzt ist. Es kommt hinzu, dass nicht die Einrichtung selbst, sondern nur dessen beidseitig ausfahrbare Tragarme unter die Befülleinrichtung und zwischen der Ladebereichsebene der Transporteinrichtung und das bezüglich der Transportrichtung vordere und das hintere Paar der CCs in Stellung gebracht wird.

Es ist schliesslich eine Einrichtung bekannt (EP-1 840 056-A1), bei der die Zapfen an den Enden der Kolbenstange der Vertikalhubteile eines als hydraulischer oder pneumatischer Zylinder ausgebildeten Vertikalhubgerätes angebracht sind und beim Ausfahren in die Öffnung des CCs eingreifen und damit die Befülleinrichtung anheben. Auch ist hierzu eine drehbare Gewindestange einsetzbar. Diese genial einfache Ausbildung zieht jedoch das Erlöschen der Betriebsgenehmigung des Waggons nach sich und erfordert eine Neuzulassung, was nicht nur aufwendig, sondern insbesondere ausserordentlich zeitaufwendig ist.

Der Erfindung liegt daher die Aufgabe zugrunde, eine gattungsgemässe Einrichtung vorzuschlagen, die keine Bauartveränderung darstellt und für die deshalb keine Neuzulassung notwendig ist.

Diese Aufgabe wird erfindungsgemäss durch den Gegenstand des Anspruchs 1 gelöst.

Die mit der Transporteinrichtung zusammenwirkende, als Verschubträger ausgebildete erfindungsgemässe Einrichtung ist mit einen eigenen Antrieb zum translatorischen Bewegen des auf ihm aufliegenden Containers als Befülleinrichtung ausgestattet. Es kommt hinzu, dass mit der Erfindung herkömmliche Container weiter verwendet werden können, vorausgesetzt, sie verfügen über CCs. An der Transporteinrichtung, die im übrigen überdies auch zugleich weiter in herkömmlichen Containerterminals eingesetzt werden kann, müssen nur geringfügige Anbauten vorgesehen werden. Vor dem Absenken muss aber je ein Verschubträger unter den Container, also unter dessen vorderes und unter dessen hinteres Paar CCs und über der Ladebereichsebene der Transporteinrichtung in Stellung gebracht werden. Hierzu kann jeder Verschubträger kürzer als der Abstand der einzelnen CCs jedes Paars ausgestaltet sein; es muss lediglich an der Transporteinrichtung sichergestellt sein, dass sich die Ladebereichsebene bis in den Bereich neben dem vorderen sowie dem hinteren Paar CCs erstreckt, wo der Verschubträger zunächst abgesetzt wird, bevor er in Transportrichtung und quer zu seiner Verschieberichtung genau unter den -zwei CCs auf der Unterseite des Containers verbindenden- Träger plaziert wird. Diese Zusätze an der Transporteinrichtung sind geringfügig sowie einfach und unproblematisch sowie ohne Verlust der Betriebs- sowie Bauartgenehmigung des Waggons anzubringen.

Insgesamt ergibt sich, dass sich die auch nachrüstbaren Einbauten im Gewichtslimit für Zulassungsänderungen bewegen. Schon existierende Umschlagstechniken auf der Transporteinrichtung z.B. dem Waggon können weiter genutzt werden. Andererseits können mit dem erfindungsgemässen System versehene Transporteinrichtungen ohne Einschränkung für den bislang üblichen Einsatz nach dem Stand der Technik weiter genutzt werden. Weiter können jegliche über CCs verfügenende Container ohne Änderungen eingesetzt werden und der Verschubträger nicht für einen Hub, sondern lediglich für eine translatorische Bewegung in der Ebene ausgelegt sein, was nicht nur das Handling, sondern auch Aufbau verbessert und die Störanfälligkeit verringert.

Die gattungsgemäss bekannte Einrichtung zum quer zur Transportrichtung erfolgenden Auf- und Abladen von auf einer Transporteinrichtung befindlichen Befülleinrichtung, die über vier CCs an ihrer Unterseite auf an der Ladebereichsebene der Transporteinrichtung wie Waggon oder Lastkraftwagen befindlichen vorderen oder hinteren Paaren von Zapfen aufsetzbar und mittels an der Transporteinrichtung vorgesehenen, den Container über die CCs anhebenden Vertikalhubteil eines Vertikalhubgerätes anhebbar sind, wobei die Einrichtung einen Antrieb aufweist und als bei angehobener Befülleinrichtung in Transportrichtung zwischen der Ladebereichsebene der Transporteinrichtung und das bezüglich der Transportrichtung vordere und das hintere Paar der CCs parallel zu der Transportrichtung und nach Absenken des Vertikalhubteiles unter die Ladebereichsebene bringbar, nach dem Absenken an den CCs angreifend und zum translatorischen Transport der aufgesetzten Befülleinrichtung in Verschieberichtung quer zu der Transportrichtung mittels des Antriebes ausgebildet sowie die Einrichtung als Verschubträger ausgebildet ist, weist also erfindungsgemäss zwecks dessen Verschub von einer entweder jedes Paar Zapfen übergreifenden oder dazwischen befindlichen Ausgangslage in Verschieberichtung mit aufsitzender Befülleinrichtung zumindest einen in seiner Schmalseite mündenden, nach unten offenen Kanal zum Überfahren des zumindest einen Zapfens des Paars auf.

Wenn jeder Verschubträger länger als der Abstand der einzelnen CCs jedes Paars sein soll, so weist in vorteilhafter Weiterbildung der Erfindung der Verschubträger zwecks dessen mit einem parallel zu der Transportrichtung verlaufenden Querschub erfolgenden Plazierung zwischen die Ladebereichsebene der Transporteinrichtung und das bezüglich der Transportrichtung vordere oder hintere Paar der CCs bei angehobenem Container nicht nur, wie an sich bekannt, zwei in dessen einer Seite mündende, von der Ober- bis zur Unterseite reichende, an die Form der Vertikalhubteile des Vertikalhubgeräts angepasste Ausnehmungen, sondern zumindest eine nach unten offene Auenehmung in der Langseite auf, um die Zapfen überfahren zu können, wobei zweckmässigerweise die Ausnehmungen in der Langseite bis zu dem Kanal reicht.

Um während des translatorischen Transports der aufgesetzten Befülleinrichtung in Verschieberichtung diese zu sichern, kann sie auf ihrer Oberseite in vorteilhafter Ausgestaltung selbst Verschubträgerzapfen aufweisen.

Weitere zweckmässige Ausgestaltungen und Weiterbildungen der Erfindung sind in den Unteransprüchen gekennzeichnet.

Auführungsbeispiele der Erfindung werden nachfolgend unter Bezugnahme auf die Zeichnung näher erläutert. In dieser zeigt:
Fig. 1 ein System zum Auf- und Abladen von Containern;
Fig. 2 eine Seitenansicht einer als Waggon ausgebildete Transporteinrichtung;
Fig. 3 das System gemäss Fig. 1 in teilweise abgebrochener Darstellung und grösserem Massstab mit einer als Waggon ausgebildeten Transporteinrichtung, in einem schon etwas angehobenen ersten Betriebszustand;
Fig. 4 das System gemäss Fig. 3 in einem zweiten Betriebszustand;
Fig. 5 das System gemäss Fig. 3 in einem dritten Betriebszustand;
Fig. 6 das System gemäss Fig. 5, in teilweise abgebrochener Draufsicht.
Fig. 7 das System gemäss Fig. 5, in erster Weiterbildung;
Fig. 8 das System gemäss Fig. 5, in zweiter Weiterbildung für einen Lastkraftwagen im Betriebszustand und
Fig. 9 das System gemäss Fig. 8, im Transportzustand.

Zur Straffung der Zeichnungsbeschreibung sollen mit gleichem Bezugszeichen versehene Teile auch identisch sein, so dass nicht jedes Teil jeder einzelnen Figur beschrieben werden muss.

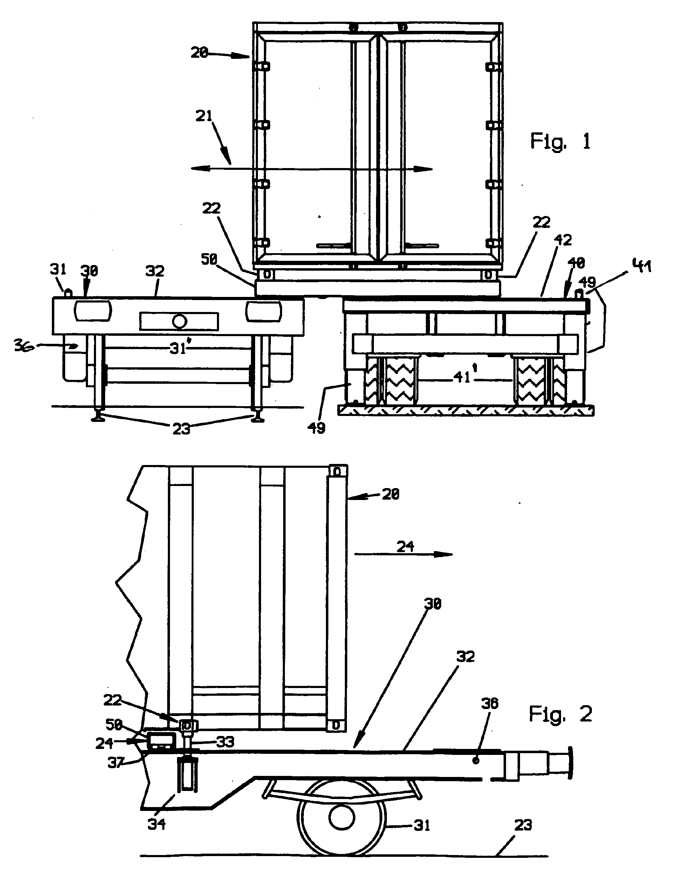

In Fig. 1 ist schematisch ein Container 20 gezeigt, der quer zu seiner Transportrichtung, d.h. in der Verschieberichtung 21 von einem Waggon 30 als Transporteinrichtung auf einen parallel zu diesem stehenden Lastkraftwagen 40 als Transporteinrichtung mittels eines Verschubträgers 50 bewegt werden kann, auf dessen Oberseite die CCs 22 des Containers 20 aufliegen.

Der Waggon 30 steht mit seinen Schienenrädern 31' auf schematisch dargestellten Schienen 23 und ist mit einer Ladebereichsebene 32 versehen. Ausserdem weist er vordere oder hintere Paare von Zapfen 31 auf.

Der in Fig. 1 schematisch als Rückansicht dargestellte Lastkraftwagen 40, der auch ein Sattelanhänger sein kann, weist Räder 41' sowie ausfahrbare Standstützen 49 und übliche Träger mit einer Ladebereichsebene 42 sowie Zapfen 41 auf.

Das erfindungsgemässe System besteht in der speziellen Ausgestaltung des Verschubträgers 50, die nachfolgend noch beschrieben werden wird, sowie in der Modifikation von Waggon und Lastkraftwagen als Transporteinrichtung dergestalt, dass diese mit einem Vertikalhubgerät ausgestattet werden, dessen Vertikalhubteil an den CCs angreift und über das CC den Container oder dergleichen anheben kann, was den ausserordentlichen Vorteil mit sich bringt, dass die Container nicht geändert werden müssen, sondern handelsübliche Container wie Staüdard-Spedition-Wechselbehälter nach UGCISO sowie Übersee-Container sowie Wechselbrücken Einsatz finden können. Die Modifikationen der Transporteinrichtung werden nachfolgend beschrieben.

So ist in Fig. 2, die eine Seitenansicht des Waggons 30 zeigt, mit einer an dem CC des Containers 20 angreifenden Vertikalhubteil 33 eines insgesamt mit 34 bezeichneten Vertikalhubgerät versehen. Im in Fig. 2 gezeigten angehobenen Zustand des Containers 20 kann der Verschubträger 50 so neben die vorderen oder hinteren Paare von CCs angesetzt und dann in Verschieberichtung, die quer, vorzugsweise rechtwinklig zur Transportrichtung 24 verläuft, unter den Container, also unter dessen vorderes und unter dessen hinteres Paar CCs gebracht werden. So kann jeder Verschubträger kürzer als der Abstand der einzelnen CCS jedes Paars bemessen sein, wobei lediglich an der Transporteinrichtung (also dem Waggon) und dem Lastkraftwagen sichergestellt sein muss, dass sich die Ladebereichsebene 32, 42 bis in den Bereich neben dem vorderen und dem hinteren Paar CCs erstreckt, wo der Verschubträger zunächst abgesetzt wird, bevor er parallel zu der Transportrichtung 24 und quer zu seiner Verschieberichtung 21 genau unter den die zwei CCs jedes Paars auf der Unterseite des Containers verbindenden Trägers plaziert wird. In diesem Bereich ist der Container besonders stabil konstruiert und dafür vorgesehen, in diesem Bereich Kräfte aufzunehmen. Es ist aber auch möglich, den Verschubträger länger als den Abstand der einzelnen CCs jeden Paars zu bemessen. Dann muss er entsprechend geformte Ausnehmungen aufweisen.

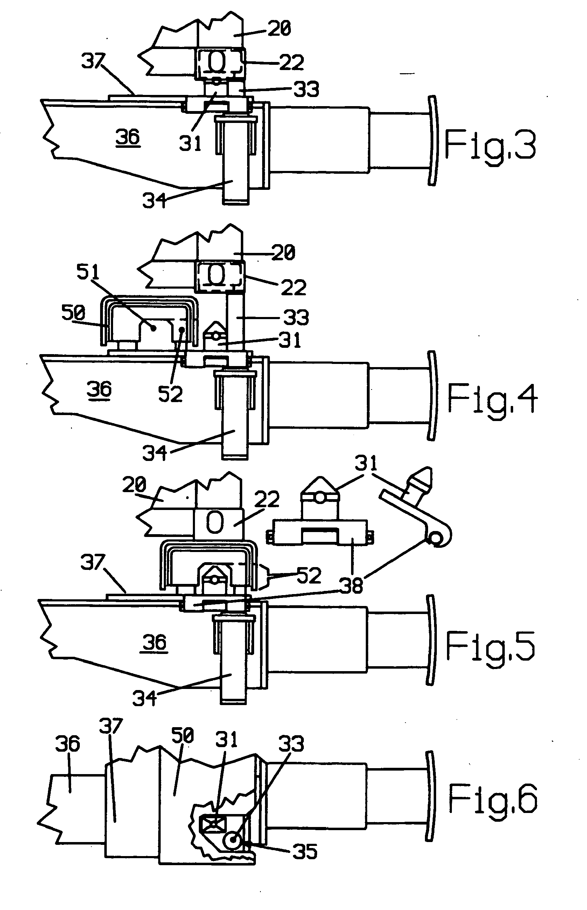

Das Vertikalhubgerät 34 des Waggons 30 ist hierbei als an die Versorgung der Transporteinrichtung angeschlossener Vertikalhubzylinder, vorzugsweise als hydraulischer oder pneumatischer Zylinder ausgebildet, wo es in den Fig. 3 bis 6 dargestellt ist.

Zur Erzielung einer biegesteifen Ladebereichsebene 32 ist die Transporteinrichtung, zum Beispiel der Waggon 30, auf dessen beiden zueinander parallelen Längsträgern 36 sowie zwischen den hinteren sowie dem vorderen Paar der an dem hinteren beziehungsweise dem vorderen Paar der CCs 22 an der Unterseite des Containers 20 angreifenden Vertikalhubteile 33 der Vertikalhubgeräte 34, wie in Fig. 2 gezeigt, mit je einem die Ladebereichsebene 32 bildenden Konsolblech 37 versehen und dient zum Aufsetzen des Verschubträgers 50 zunächst einmal in der Nähe des vorderen oder hinteres Paars der CCs 22.

Der Verschubträger 50 dient dabei zum quer zur Transportrichtung 24 erfolgenden Auf- und Abladen von auf der Transporteinrichtung 30,40 befindlichen Befülleinrichtung in Form des Containers 20, der über vier sogenannte CCs an ihrer Unterseite auf an der Ladebereichsebene 32,42 der Transporteinrichtung wie Waggon 30 oder Lastkraftwagen 40 befindlichen vorderen oder hinteren Paare von Zapfen 31 aufsetzbar und mittels an der Transporteinrichtung 30,40 vorgesehenen, den Container 20 über die CCs 22 anhebenden Vertikalhubteil 33,43 des Vertikalhubgerätes 34 , 44 anhebbar ist, wobei der Verschubträger 50 einen nicht gezeigten Antrieb aufweist. Bei angehobenem Container 20 kann der Verschubträger 50 in Transportrichtung 24 zwischen die Ladebereichsebene 32,42 der Transporteinrichtung 30,40 und das bezüglich der Transportrichtung 24 vordere und das hintere Paar der CCs 22 in Stellung gebracht werden und nach dem Absenken des Vertikalhubteiles 33,43 unter die Ladebereichsebene 32,42 an den CCs 22 angreifen. Zugleich ist der Verschubträger 50 zum translatorischen Transport des aufgesetzten Containers 20 in Verschieberichtung 21 quer zu der Transportrichtung 24 mittels des Antriebes ausgebildet.

Der Verschubträger 50 weist zu dessen Verschub von einer jedes Paar Zapfen 31 übergreifenden (und einer nicht dazwischen befindlichen) Ausgangslage in Verschieberichtung 21 mit aufsitzendem Container 20 zumindest einen in seiner Schmalseite mündenden, nach unten offenen Kanal 51 zum Überfahren der Zapfen 31 auf (Figur 4).

Um bei angehobenem Container 20 den Verschubträger 50 in Transportrichtung 24 mit einem Querschub unter das vordere und das hintere Paar der CCs 22 trotz der Zapfen 31 in Stellung bringen zu können, weist der Verschubträger 50 zumindest eine nach unten offene, an die Form der Zapfen angepasste Aussparung 52 in seiner Langseite auf (Figuren 3 und 4), wobei die Aussparung bis zu dem Kanal 51 reicht.

Im übrigen weist der Verschubträger 50, wie an sich bekannt, zu dessen mit einem parallel zu der Transportrichtung 24 verlaufenden Querschub bei angehobenem Container 20 erfolgenden Plazierung zwischen die Ladebereichsebene 32,42 der Transporteinrichtung 30,40 und das bezüglich der Transportrichtung 24 vordere oder hintere Paar der CCs 22 zwei in dessen einer Seite mündende, von der Ober- bis zur Unterseite reichende, an die Form der Vertikalhubteile 33,43 des Vertikalhubgerätes 34,44 angepasste, nicht näher gezeigte Ausnehmungen auf.

Die Zapfen 31 sind üblicherweise an einer Fussplatte 38 (Figur 5) angeordnet. Zum Angriff an dem CC 22 ist im Bereich jedes Zapfens 31 zumindest eine als Bohrung 35 (Figur 6) ausgebildete Öffnung vorgesehen, die auch an der Fussplatte 32 angeordnet sein können. Die Fussplatte 32 ist in Draufsicht rechteckförmig ausgebildet und weist den Zapfen 31 mittig auf. Die Bohrung 35 ist dabei auf einer Diagonalen der rechteckförmigen Fussplatte 38 angeordnet.

Das als Kolbenstange 33 des hydraulischen oder pneumatischen Zylinders ausgebildeten Vertikalhubgerät 34,44 kann durch diese Bohrung 35 von unterhalb der Ladebereichsebene hindurch ausgefahren werden. Sie (33) ist dabei mit ihrem freien Ende zum Angriff an dem CC 22 ausgebildet, wobei dieses freie Ende der Kolbenstange 33 eben ausgebildet ist sowie gehärtet sein kann.

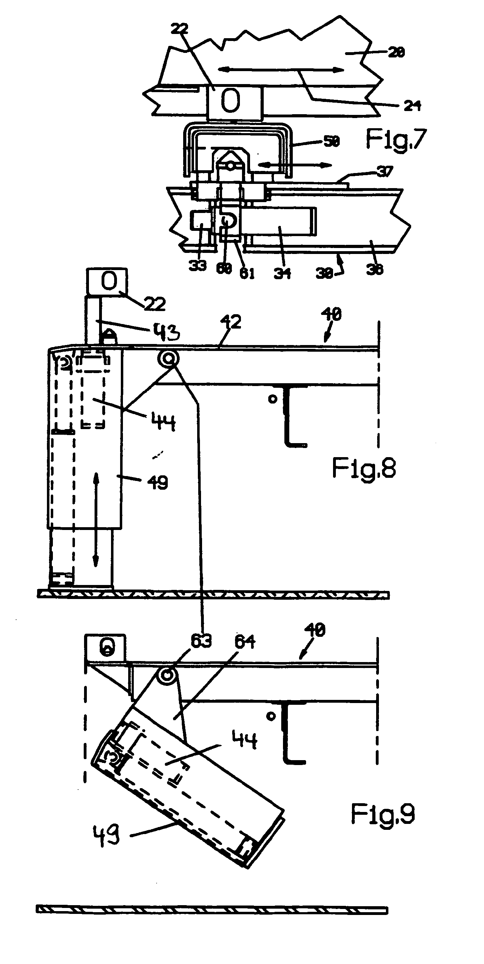

Der Zylinder 34 ist, wie in den Figuren 7 bis 9 gezeigt, bezüglich der Transporteinrichtung 30,40 schwenkbar ausgebildet. Hierbei weist bei dem Waggon 30 der Zylinder 34 zwei Schwenkzapfen 60 auf, die in entsprechenden Halterungen eines Bügels 61 schwenkbar gelagert sind (Figur 7). Nachdem der Zylinder eine von dem benötigten Hub zwingend vorgegebene Bauhöhe erfordert, kann er nicht stets in solchen Bereichen vorgesehen werden, in denen der Längsträger schon eine geringere Bauhöhe aufweist und/oder die Drehschemel oder die schwenkbaren Radachsen vorgesehen sind, ist der Zylinder vorteilhafterweise bezüglich der Transportein- richtung schwenkbar ausgebildet, und er lässt sich, wenn er nicht benötigt wird, in eine raumsparende und/oder nicht störende Transportlage schwenken. Zweckmässigerweise werden die Zylinder des vordere Paars und auch jene dess hinteren Paars zwangsgeführt, bspw. von einer teleskopierbaren Stange durch die beiden Längsträger hindurch von nur einer Seite der Transporteinrichtung betätigt und dabei spiegelbildlich synchron aus ihrer Transportlage in die Betriebslage geschwenkt, ohne dass die Bedienungsperson um den Zug mit mehreren Waggons herumgehen muss.

Bei dem Lastkraftwagen 40 ist der Zylinder 34 in den Standstützen 49 angeordnet und sind diese Standstützen 49 schwenkbar ausgebildet, und mittels eines Trägers 64 an bezüglich des Lastkraftwagens 40 fest angeordneten Schwenklager 63 schwenkbar gelagert.

Es ist auch möglich, anstelle an den CCs an anderen entweder dafür extra an dem Container angebrachten Stellen (z.B. eine neben dem CC nach innen versetzte Platte) oder an schon vorhandenen Stellen wie aussenseitigen Längsträgern oder Gurten mit dem freien Ende der Kobenstange selbst oder aber über daran befestigten Kolbenstangenaufsatz, auch an Greifkanten des Containers angreifen zu lassen, so dass eine sichere Krafteinleitung in den Container erfolgt.

## Patentansprüche

1. Einrichtung zum quer zur Transportrichtung (24) erfolgenden Auf- und Abladen von auf einer Transporteinrichtung (30,40) befindlichen Befülleinrichtung (20), die über vier sogenannte Corner Castings (nachfolgend: CC) an ihrer Unterseite auf an der Ladebereichsebene (32,42) der Transporteinrichtung (30,40) wie Waggon (30) oder Lastkraftwagen (40) befindlichen vorderen oder hinteren Paaren von Zapfen (31) aufsetzbar und mittels an der Transporteinrichtung (30,40) vorgesehenen, die Befülleinrichtung (20) über die CCs (22) anhebenden Vertikalhubteil (33,43) eines Vertikalhubgerätes (34,44) anhebbar ist wobei die Einrichtung einen Antrieb aufweist und bei angehobener Befülleinrichtung in Transportrichtung (24) zwischen die Ladebereichsebene (32,42) der Transporteinrichtung (30,40) und das bezüglich der Transportrichtung (24) vordere und
das hintere Paar der CCs (22) bringbar und nach Absenken des Vertikalhubteiles (33,43) unter die Ladebereichsebene (32,42) an den CCs (22) angreifend und zum translatorischen Transport der aufgesetzten Befülleinrichtung (20) in Verschieberichtung (21) quer zu der Transportrichtung (24) mittels des Antriebes ausgebildet sowie die Einrichtung als Verschubträger (50) ausgebildet ist, **dadurch gekennzeichnet, dass** der Verschubträger (50) zu dessen Verschub von einer entweder jedes Paar Zapfen (31) übergreifenden oder dazwischen befindlichen Ausgangslage in Verschieberichtung (21) mit aufsitzender Befülleinrichtung (20) zumindest einen in seiner Schmalseite mündenden, nach unten offenen Kanal (51) zum Überfahren des zumindest einen Zapfens (31) des Paars aufweist.

2. Einrichtung nach Anspruch 1, **dadurch gekennzeichnet,**
**dass** der Verschubträger (50) zu dessen mit einem parallel zu der Transportrichtung (24) verlaufenden Querschub bei angehobener Befülleinrichtung (20) erfolgenden Plazierung zwischen die Ladebereichsebene (32,42) der Transporteinrichtung (30,40) und das bezüglich der Transportrichtung (24) vordere oder hintere Paar der CCs (22) zumindest eine nach unten offene Aussparung (52) in der Langseite aufweist.

3. Einrichtung nach Anspruch 2, **dadurch gekennzeichnet,**
**dass** die Aussparung (52) in der Langseite bis zu dem Kanal (51) reicht.

4. Einrichtung nach Anspruch 1 oder 2, **dadurch gekennzeichnet, dass** der Verschubträger (50) zu dessen mit einem parallel zu der Transportrichtung (24) verlaufenden Querschub bei angehobener Befülleinrichtung (20) erfolgenden Plazierung zwischen die Ladebereichsebene (32,42) der Transporteinrichtung (30,40) und das bezüglich der Transportrichtung (24) vordere oder hintere Paar der CCs (22) zwei in dessen einer Seite mündende, von der Oberbis zur Unterseite reichende, an die Form der Vertikalhubteile (33,43) des Vertikalhubgerätes (34,44) angepasste Ausnehmungen aufweist.

5. Einrichtung nach einem der vorhergehenden Ansprüche, **dadurch gekennzeichnet, dass** sie auf ihrer Oberseite selbst Verschubträgerzapfen aufweist.

## Claims

1. A device for the loading and unloading, implemented transversely to the transport direction (24), of a container unit (20) disposed on transport unit (30, 40), which can be fitted via four so-called corner castings (referred to below as: CCs) provided on its underside onto front or rear pairs of pins (31) disposed in the loading-area plane (32, 42) of the transport unit (30, 40), such as a railway wagon (30) or heavy goods vehicle (40), and lifted by means of a vertical lifting element (33, 43) of a vertical lifting device (34, 44) provided on the transport unit (30, 40) lifting the container unit (20) via the CCs (22), wherein the device provides a drive and is designed to be brought, with raised container unit, in the transport direction (24), between the loading-area plane (32, 42) of the transport unit (30, 40) and the front and rear pair of CCs (22) relative to the transport direction (24) and engaging with the CCs (22) after the lowering of the vertical lifting element (33, 43) below the loading-area plane (32, 42) and is designed for the translational transport of the fitted container unit (20) in the shunting direction, (21) transversely to the transport direction (24), by means of the drive, and the device is designed as a shunting bar (50),
**characterised in that**,
in order to shunt it with mounted container unit (20) in the shunting direction (21) from a starting position either engaging over each pair of pins (31) or disposed between them, the shunting bar (50) provides at least one channel (51) opening into its short side, open at the bottom for movement over the at least one pin (31) of the pair.

2. The device according to claim 1,
**characterised in that**,
for its placing, implemented with a transverse displacement moving parallel to the transport direction (24) with raised container unit (20) between the loading-area plane (32, 42) of the transport unit (30, 40) and the front or rear pair of CCs (22) relative to the transport direction (24), the shunting bar (50) provides at least one recess (52) in the longitudinal side open at the bottom.

3. The device according to claim 2,
**characterised in that**
the recess (52) in the longitudinal side extends up to the channel (51).

4. The device according to claim 1 or 2,
**characterised in that**,
for its placing, implemented with a transverse displacement moving parallel to the transport direction (24) with raised container unit (20) between the loading-area plane (32, 42) of the transport unit (30, 40) and the front or rear pair of CCs (22) relative to the transport direction (24), the shunting bar (50) provides two recesses opening in its one side, extending from the upper to the lower side, adapted to the shape of the vertical lifting parts (33, 43) of the vertical lifting device (34, 44).

5. The device according to any one of the preceding claims,
**characterised in that**,
on its upper side, it itself provides shunting-bar pins.

## Revendications

1. Dispositif pour le chargement et le déchargement, transversalement au sens de transport (24), d'un dispositif de remplissage (20) se trouvant sur un système de transport (30, 40) et qui peut être posé, au moyen de quatre Corner Castings (ci-dessous CC), situés sur le dessous, sur des paires de goujons (31) antérieures ou postérieures se trouvant sur le plan de la zone de chargement (32, 42) du système de transport (30, 40) tel qu'un wagon (30) ou un poids lourd (40), et qui peut être soulevé au moyen de l'élément de levage vertical (33, 43), prévu sur le système de transport (30, 40) et soulevant le dispositif de remplissage (20) par l'intermédiaire des CC (22), d'un appareil de levage vertical (34, 44), le dispositif présentant un entraînement et, lorsque le dispositif de remplissage est soulevé dans le sens de transport (24), pouvant être placé entre le plan de la zone de chargement (32, 42) du système de transport (30, 40) d'une part et les paires antérieure et postérieure de CC (22), par rapport au sens de transport (24) d'autre part et, après l'abaissement de l'élément de levage vertical (33, 43) sous le plan de la zone de chargement (32, 42), saisissant les CC (22) et étant conçu pour le transport translatoire du dispositif de remplissage (20) posé dessus dans le sens de translation (21) transversalement au sens de transport (24) au moyen de l'entraînement et en tant que support de translation (50), **caractérisé en ce que** le support de translation (50) présente, pour sa translation depuis une situation de départ qui soit saisit chaque paire de goujons (31) par-dessus soit est positionnée entre, dans le sens de translation (21), avec un dispositif de remplissage (20) posé dessus, au moins un canal (51), qui débouche sur son petit côté et qui est ouvert vers le bas, pour passer par-dessus d'au moins un goujon (31) de la paire.

2. Dispositif selon la revendication 1, **caractérisé en ce que** le support de translation (50), pour pouvoir se placer, lorsque le dispositif de remplissage (20) est soulevé, avec une translation transversale parallèle au sens de transport (24), entre le plan de la zone de chargement (32, 42) du système de transport (30, 40) et la paire de CC (22) antérieure ou postérieure par rapport au sens de transport (24), présente au moins un évidement (52) ouvert vers le bas, dans le côté long.

3. Dispositif selon la revendication 2, **caractérisé en ce que** l'évidement (52) dans le côté long arrive jusqu'au canal (51).

4. Dispositif selon la revendication 1 ou la revendication 2, **caractérisé en ce que** le support de translation (50), pour sa translation transversale, parallèlement au sens de transport (24) lorsqu'il vient se placer, alors que le système de remplissage (20) est soulevé, entre le plan de la zone de chargement (32, 42) du système de transport (30, 40) et la paire de CC (22) antérieure ou postérieure par rapport au sens de transport (24), présente deux évidements débouchant sur l'un de ses côtés, qui vont du dessus jusqu'au dessous et adaptés à la forme des éléments de levage vertical (33, 43) de l'appareil de levage vertical (34, 44).

5. Dispositif selon l'une quelconque des revendications précédentes, **caractérisé en ce qu'**il présente, sur le dessus, des goujons pour support de translation.
